# EUROPEAN PATENT APPLICATION

(11) **EP 1 455 483 A2**
(43) Date of publication of application: **08.09.2004**
(21) Application number: 04002223.8
(22) Date of filing: 02.02.2004
(51) Int. Cl.: H04L 12/24

(54) **Virtual network topology generation**

(30) Priority: 06.03.2003 US 382942
(71) Applicant: MICROSOFT CORPORATION, Redmond, Washington 98052-6399 (US)
(72) Inventor: Hydrie, Aamer, Seattle Washington 98119 (US); Cedola, Kent D., Bellevue Washington 98007 (US)
(74) Representative: Grünecker, Kinkeldey, Stockmair & Schwanhäusser Anwaltssozietät

(57) **Abstract**

An architecture and methodology provides for automatic creation of arbitrary virtual network topologies from a physical computing system. The architecture and methodology allows automated and remote installation of multiple distributed applications on the same physical computing system without having to physically connect computers and configure wirings within the system.

## Description

### RELATED APPLICATIONS

This patent application is related to the following US patent applications (all of which are incorporated by reference):
- US Patent Application Serial No. 09/695,812, filed on October 24, 2000, titled "SYSTEM AND METHOD FOR DISTRIBUTED MANAGEMENT OF SHARED COMPUTERS".
- US Patent Application Serial No. 09/695,813, filed on October 24, 2000, titled "SYSTEM AND METHOD FOR LOGICAL MODELING OF DISTRIBUTED COMPUTER SYSTEMS".
- US Patent Application Serial No. 09/695,820, filed on October 24, 2000, titled "SYSTEM AND METHOD FOR RESTRICTING DATA TRANSFERS AND MANAGING SOFTWARE COMPONENTS OF DISTRIBUTED COMPUTERS".
- US Patent Application Serial No. 09/695,821, filed on October 24, 2000, titled "USING PACKET FILTERS AND NETWORK VIRTUALIZATION TO RESTRICT NETWORK COMMUNICATIONS".
- US Patent Application Serial No. 09/696,707, filed on October 24, 2000, titled "SYSTEM AND METHOD FOR DESIGNING A LOGICAL MODEL OF DISTRIBUTED COMPUTER SYSTEM AND DEPLOYING PHYSICAL RESOURCES ACCORDING TO THE LOGICAL MODEL".
- US Patent Application Serial No. 09/696,752, filed on October 24, 2000, titled "SYSTEM AND METHOD PROVIDING AUTOMATIC POLICY ENFORCEMENT IN A MULTI-COMPUTER SERVICE APPLICATION".

### TECHNICAL FIELD

The invention relates to distributed computing systems and distributed applications that run on the distributed computing systems. More particularly, this invention relates to techniques for automatically creating arbitrary virtual network topologies from the physical distributed computing system to allow that system to host multiple distributed applications.

### BACKGROUND

Internet usage has exploded over the past several years and continues to grow. People have become very comfortable with many services offered on the World Wide Web (or simply "Web"), such as electronic mail, online shopping, gathering news and information, listening to music, viewing video clips, looking for jobs, and so forth. To keep pace with the growing demand for Internet-based services, there has been tremendous growth in the computer systems dedicated to hosting websites, providing backend services for those sites, and storing data associated with the sites.

One type of distributed computer system is an Internet data center (IDC), which is a specifically designed complex that houses many computers for hosting Internet-based services. IDCs, which also go by the names "Webfarms" and "server farms", typically house hundreds to thousands of computers in climate-controlled, physically secure buildings. These computers are interconnected to run one or more programs supporting one or more Internet services or websites. IDCs provide reliable Internet access, reliable power supplies, and a secure operating environment. Another type of distributed computer system is an enterprise data centers (EDC). EDCs are similar to IDCs, but are targeted to the enterprise.

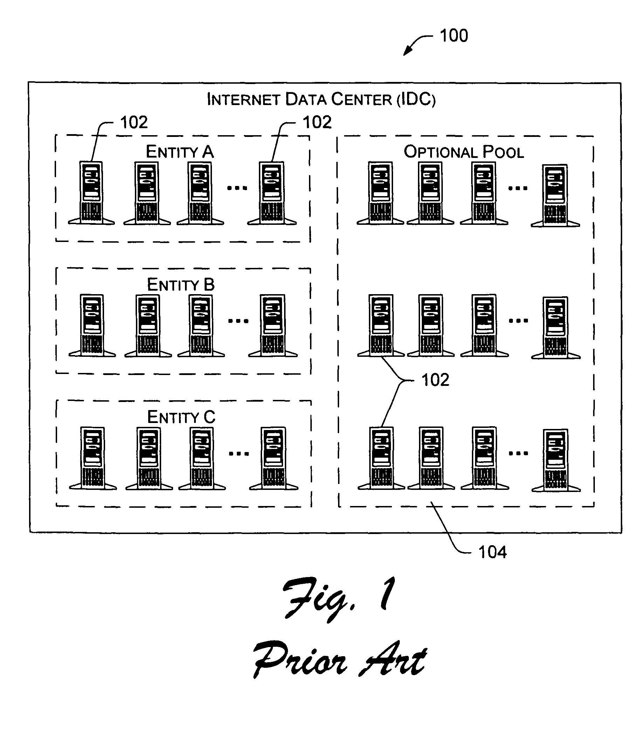

Fig. 1 shows an Internet data center 100. It has many server computers 102 arranged in a specially constructed room. The computers are general-purpose computers, typically configured as servers. An Internet data center may be constructed to house a single site for a single entity (e.g., a data center for Yahoo! or MSN), or to accommodate multiple sites for multiple entities (e.g., an Exodus center that host sites for multiple companies).

The IDC 100 is illustrated with three entities―entity A, entity B, and entity C― that share the computer resources. These entities represent various companies that want a presence on the Web. The IDC 100 has a pool of additional computers 104 that may be used by the entities at times of heavy traffic. For example, an entity engaged in online retailing may experience significantly more demand during the Christmas season. The additional computers give the IDC flexibility to meet this demand.

Today, large IDCs are complex and often called upon to host multiple applications. For instance, some websites may operate several thousand computers, and host many distributed applications. These distributed applications often have complex networking requirements that require operators to physically connect computers to certain network switches, as well as manually arrange the wiring configurations within the IDC to support the complex applications. As a result, this task of building physical network topologies to conform to the application requirements can be a cumbersome, time consuming process that is prone to human error. Accordingly, there is a need for improved techniques for designing and deploying distributed applications onto the physical computing system.

### SUMMARY

An architecture and methodology for automatically creating arbitrary virtual network topologies from a physical computing system is described. The architecture and methodology allows automated and remote installation of multiple distributed applications on the same physical computing system without having to physically connect computers and configure wirings within the system.

In one implementation, the distributed computing system is comprised of many computers interconnected via a network of switches (e.g., Ethernet switches). The computers may be programmed to perform various specific tasks called for by the application (e.g., Web servers, databases, load balancing, firewalls, bulk data storage, etc.). The methodology creates one or more virtual local area networks (VLANs) atop the physical network for each distributed application to be hosted on the distributed computing system. Computers used to host the distributed applications are automatically connected to respective VLANs associated with the applications. The VLANs ensure that the applications operate in isolation from one another.

The automated connection of computers involves two operations. The first operation is the assignment of a VLAN membership to the switch port to which the computer is connected. This designates the switch port to accept packets tagged with the associated VLAN identity. The second operation is the creation of virtual network interfaces (VNICs) over the single physical network interface (NIC) at each computer. Each VNIC uniquely represents an associated VLAN. This allows a computer with a single physical NIC to participate in several VLANs. Packets associated with a particular VLAN are routed to the computer and handled via the corresponding VNIC for that VLAN.

The ability to create virtual network topologies allows application architects to create essentially any type of network configuration automatically on the fly. For example, the architect can define isolation zones (i.e., "DMZs") by remotely allocating a firewall computer to a VLAN, assigning switches and adding servers to the VLAN within a given zone. Applications can then be deployed over the same computing system, where individual servers host multiple different applications.

### BRIEF DESCRIPTION OF THE CONTENTS

Fig. 1 illustrates a conventional Internet data center (IDC).

Fig. 2 illustrates a distributed computing system with physical computing resources that can be automatically configured to support one or more distributed applications.

Fig. 3 illustrates layers of a platform architecture for automating design, deployment, and management of a distributed application on a distributed computing system.

Fig. 4 shows a physical network topology of exemplary physical computing resources that can be used to host distributed applications.

Fig. 5 illustrates a virtual network topology of a distributed application that can be hosted on the physical computing resources of Fig. 4.

Fig. 6 illustrates a server used in the virtual network topology of Fig. 4, and a virtual local area network (VLAN) driver implemented on the server. Fig. 6 further shows a resource manager used to deploy the physical resources for the distributed application according to the virtual network topology.

Fig. 7 illustrates a process for generating a virtual network topology from the physical computing resources.

### DETAILED DESCRIPTION

The following disclosure describes generation of virtual network topologies for automated deployment of distributed software applications on physical computing resources. The ability to generate arbitrary virtual network topologies from a physical computing system enables creation of custom network topologies for every distributed application hosted on the same distributed computing system. This is particularly helpful for large datacenters, which are complex and often called upon to host multiple applications. Distributed applications installed at such datacenters often have complex networking requirements and building physical network topologies to conform to these requirements can be a cumbersome, time consuming process that is prone to human error. Enabling generation of virtual network topologies that does not require physical re-configuration of the computing system for each deployed application (e.g., rerouting wiring, physically connecting computers to various switches, etc.) reduces the dependence on human-centric operations, thereby reducing costs and the likelihood of human error.

### Distributed Computing System

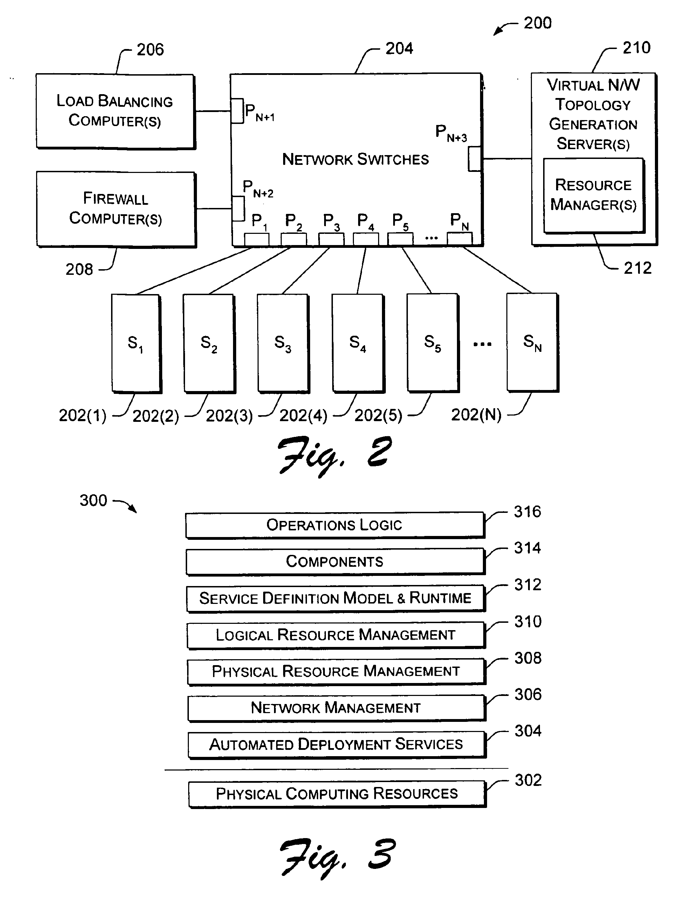

Fig. 2 shows a distributed computing system 200 that can be automatically deployed as needed to support one or more distributed applications. The distributed computing system 200 includes a monolithic collection of many servers 202(1), 202(2), ..., 202(N) interconnected via a network of switches 204. In one implementation, the network switches 204 are non-blocking Ethernet switches, although other types of switches may be used. The network 204 is illustrated as having multiple physical ports P₁, P₂, ..., P_{N} to which the servers 202(1)-202(N) are respectively connected. The distributed computing system 200 further includes one or more load balancing computers 206 and one or more firewall computers 208. Each of these computer types is shown connected to physical ports P_{N+1} and P_{N+2} of network switches 204. In addition to load balancers and firewalls, the distributed computing system may further include other types of special purpose devices, such as web caches, SSL (secure sockets layer) accelerators, NAS (network attached storage) devices, and so on.

The distributed computing system 200 is representative of the physical resources employed in a large-scale computing system, such as an Internet data center (IDC) that hosts Internet-based services, or more generally, a datacenter. An exemplary datacenter might consist of hundreds to thousands of computers interconnected by a local area network (LAN).

The distributed computing system 200 further includes one or more virtual network topology generation servers 210, which is illustrated as being coupled to the network switches 204 via physical port P_{N+3}. This server 210 enables an application architect to create virtual network topologies from the distributed computing system 200 so that multiple distributed applications can be hosted on the same system 200. A distributed application is a software program that is implemented on, and executed by, multiple networked computers. Examples of such applications include email services, websites, content databases, online commerce, storage, news and information services, entertainment services, and so forth.

To generate a virtual network topology, the server 210 creates at least one virtual local area network (VLAN) for each distributed application. The server 210 then directs selected servers and associated switch ports to associate themselves with a particular VLAN. The virtual network topology generation server 210 runs one or more resource managers 212 that facilitate deployment of the physical resources to respective VLANs in support of the distributed applications. The resource manager(s) 212 communicate with the servers 202, the network switches 204, load balancing computer(s) 206, and the firewall computer(s) 208 to establish various VLANs so that associated applications can operate securely in isolation to one another. The resource manager(s) 212 track creation and allocation of VLANs, as well as which computer(s) are connected to the VLANs. Such information can be kept in a database maintained by the resource manager(s) 212 at the virtual network topology generation server 210. The server 210 also enables customization of an application's topology. For example, it can create isolation zones, or "DMZs", within an application to isolate critical components.

There are several ways in which virtual network topologies can be utilized. Virtual topology generation can be used, for example, to facilitate automation. Network topologies can be generated on demand without human intervention, as is described below in more detail. Virtual topology generation also allows the same physical network to host multiple applications in a secure manner, without applications interfering with another. Virtual topology generation allows an application architect to define and enforce separate isolation zones that isolate portions of applications from other portions. Such isolation zones can be constructed on the fly in very little time. Yet another possible use of virtual topology generation is to enable pooling of specialized hardware resources among multiple distributed applications. In Fig. 2, for example, a pool of load balancing computers can be defined and connected at any point on the physical network. A load balancer can then be allocated from this pool and placed in an application's virtual network.

Prior to describing how a virtual network topology is generated and an application is automatically deployed onto the physical computing resources, the following section addresses a platform architecture built atop the physical computing system. The architecture provides the framework within which various pieces of the automated deployment and management functions can be developed.

### Platform Architecture

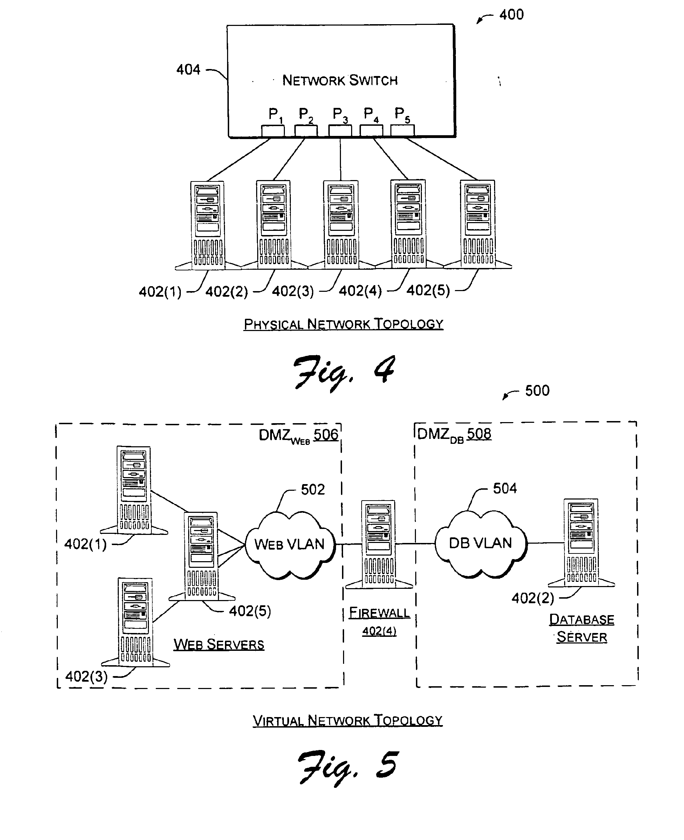

Fig. 3 shows a platform architecture 300 for automating design, deployment, and management of distributed applications on a distributed computing system 200. The architecture 300 shows multiple layers atop a base layer 302 that represents the physical computer resources of the distributed computing system 200. An automated deployment services layer 304 provides tools to convert machines into servers used in the distributed computing system 200. Such tools allow creation, editing, and deployment of OS (operating system) images. The remote programming of the machine is accomplished using fully programmatic interfaces, such as WMI (Windows Management Instrumentation), which is a programming interface (API) in Microsoft's Windows® operating systems that allows system and network devices to be configured and managed.

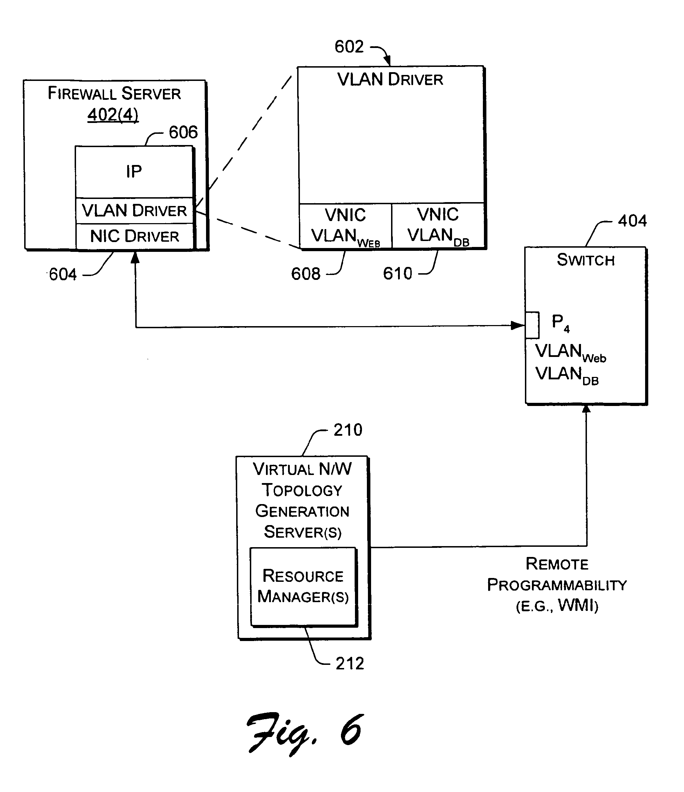

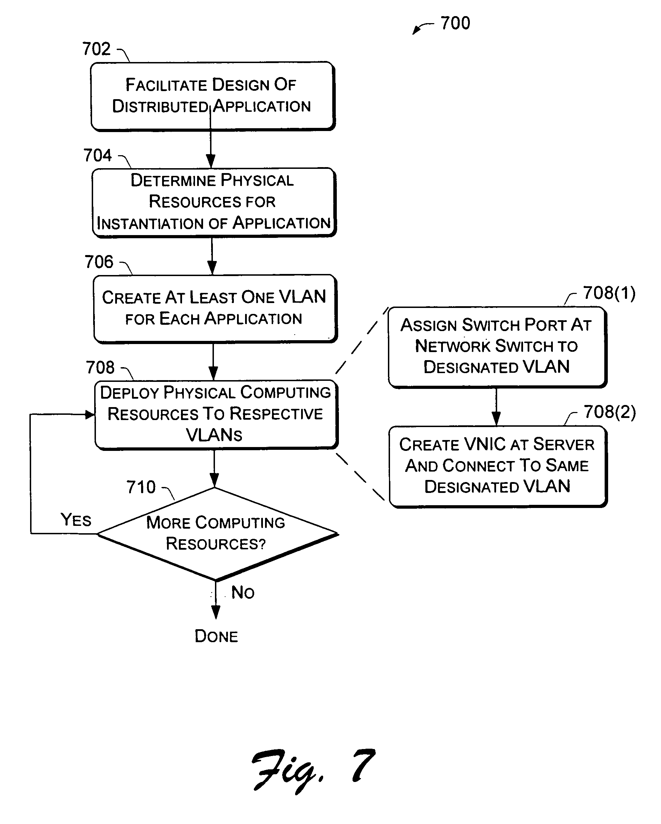

A network management layer 306 sits atop the automated deployment services layer 304. The network management layer 306 allows for network management and virtual topology generation. In part, the network management layer supports a driver model for network computers that facilitates connection of individual computers to one or more VLANs via a single physical network interface connected to an associated port of the network switches 204. According to the driver model, a VLAN driver is installed at the server and used to create virtual network interfaces (VNICs) above the single physical network interface. The VLAN driver creates one virtual network interface (VNIC) for each VLAN. The VNICs reside just above the network interface (NIC) in the IP stack at the server so that the server can handle packets passed over more than one VLAN, even though all packets physically travel through the same physical NIC. This is described in more detail below with respect to Fig. 6.

The driver model enables configuration of VLAN tagging on switch ports to allow data packets being passed over the distributed computing system to be tagged with identities of the VLAN to which they belong. The network switches 204 enforce the tagging and only accept packets with tags identifying the VLANs to which the switches belong. In one implementation, the network switches 204 have both tagged ports and non-tagged ports. Tagged ports of a switch are tagged with VLANs identifiers and used for connection to tagged ports of other switches. This allows rapid transfer of packets through the network of switches. Untagged ports of a switch are used for connection to the servers 202 or computers 206, 208. When packets reach their destination server's switch port, VLAN tags are stripped from the packets prior to communicating the packets upstream to the servers so that the servers need not know anything about the tagging.

A physical resource management layer 308 resides atop the network management layer 306. The physical resource management layer 308 maintains a physical model of the distributed computing system 200, tracking ownership and coordinating allocation of all physical computing resources. The physical management layer 308 further supports batched resource allocation, thereby enabling dynamic configuration and management of physical computing resources.

A logical resource management layer 310 sits atop the physical resource management layer 308. The logical resource management layer 310 facilitates allocation of logical resources requested by the distributed application. For instance, the application might call for such resources as databases, load balancing services, firewall, web services, and so forth. The logical resource management layer 310 exposes such logical resources.

The next layer is the service definition model and runtime layer 312, which allows description of the distributed application and tracking of its operation. The service definition model (SDM) provides a namespace and context for describing operations processes and an API for application introspection and control of application resources. It further enables operators and developers to share common application views.

The sixth layer atop the computing resources layer 200 is the components layer 314. This layer permits definition of reusable building blocks of a distributed application, which use the SDM APIs for context, naming, and binding. These building blocks are referred to as "components".

The top layer is the operations logic layer 316, which accommodates the operational aspects of the distributed application. The operations logic is responsible for starting a service, growing and shrinking the service, upgrades and downgrades, fault detection and recovery, and state partitioning. The operations logic enables reuse of proven operational practices across deployments and applications. Through use of the SDM layer, the operations logic has context to better understand issues that may arise. For instance, when a failure occurs, the operations logic can determine that the failure occurred at the front-end of an email service, rather than just at some server in the middle of the room.

### Virtual Network Topologies

The platform architecture provides a framework for generating virtual network topologies on top of the physical resources so that the same computing system can support multiple applications. A virtual LAN (VLAN) can be created for each application so that the application can execute in isolation of other applications running on the distributed computing system. Once a virtual network topology is created, the system facilitates automated deployment of the physical resources and connection to the appropriate VLANs to enable execution of the distributed application.

Fig. 4 shows a physical network topology 400 having an exemplary arrangement of five servers 402(1)-402(5) interconnected via a network switch 404. Each server 402 is physically coupled to an associated port P₁-P₅ of the network switch 404. For discussion purposes, the network switch is implemented as one or more Ethernet switches.

Virtual network topologies can be created to represent distributed applications running on the physical computing resources 400. In this exemplary implementation, the virtual network topologies are created using Ethernet switches, VLANs, and virtual network interfaces (VNICs). Ethernet networks allow segregation into multiple VLANs for network isolation. Nodes in a VLAN can communicate freely with other nodes in the same VLAN, but cannot talk directly to nodes outside the VLAN. VLANs can be implemented as port-based VLANs or protocol-based VLANs. Port-based VLANs occur within a single switch while protocol-based VLANs can span multiple switches. Protocol-based VLANs are standardized according to IEEE 802.1Q. The IEEE 802.1Q standard describes how packets are marked and how VLANs are supported. This standard describes the 802.1Q packet extension as a tag header because each packet (frame) is marked (tagged) with 802.1Q information by adding the tag header to the frame.

Placing two or more computers in a VLAN is the physical equivalent of connecting those computers to the same physical network. This property is extended to create arbitrary virtual topologies on top of the physical network. Suppose, for example, that an application calls for three web servers on servers 402(1), 402(3), and 402(5) and one database on server 402(2). Moreover, the application architect is concerned about security and would like to place the web servers 402(1), 402(3), and 402(5) in one isolation zone and the database server 402(2) in a separate isolation zone, and connect the two isolation zones via a firewall.

Fig. 5 shows a virtual network topology 500 that can be formed from the physical resources 400 of Fig. 4 to achieve the applications architect's goals. The virtual network topology 500 has two VLANs: a Web VLAN 502 and a database (DB) VLAN 504. Web servers 402(1), 402(3), and 402(5) are placed in the Web VLAN 502 and the database server 402(2) is placed in the DB VLAN 504. A firewall is deployed to server 402(4), which is then connected to both the Web VLAN 502 and the database VLAN 504. This firewall 402(4) creates two isolation zones of the application, as represented by DMZ_{Web} 506 and DMZ_{DB} 508.

In this example, the firewall server 402(4) is a member of two VLANs. However, the server has just one physical interface for connection to port P₄ of the network switch 404. To enable a single physical interface to support two VLANs, a VLAN driver is installed on the server 402(4) to create two virtual network interfaces (VNICs), so that the physical network interface (NIC) appears to connect to both VLANs. From the server's perspective, each virtual network interface appears like it is physically connected to a separate network.

Fig. 6 shows the firewall server 402(4) in more detail. It implements a VLAN driver 602, which is installed in the protocol stack between the network interface (NIC) driver 604 and the IP driver 606. In one implementation, the VLAN driver 602 is downloaded and installed by the resource manager 212. The NIC driver 604 handles all packet traffic over the physical connection to the port P₄ of the switch 404. The VLAN driver 602 binds to the physical network interface and creates one or more virtual network interfaces (VNICs) over each physical network interface. Each virtual network interface represents a unique VLAN identity. In this example, the VLAN driver 602 creates two virtual network interfaces: VNIC VLAN_{Web} 608 for the Web VLAN 502 and VNIC VLAN_{DB} 610 for the DB VLAN 504.

Outgoing packets destined for a particular VLAN are tagged with the corresponding VLAN identity at the associated VNIC. The application picks the appropriate VLAN by binding to a specific VNIC interface directly. The packets are then sent out over the physical interface to the network switch. The switch examines the VLAN tag and is able to ascertain to which VLAN the packet is bound. Incoming packets are likewise tagged with a VLAN identity. The associated VNIC receives the packets, strips the tag, and passes the packets upstream to the IP driver for use in the appropriate application. This allows a server with a single physical NIC to participate in several VLANs.

The virtual network topology generation server 210 is shown coupled to the switch 404. Using remote programmability techniques, this server 210 can download and install the VLAN driver at the firewall server (if not present already) and then provide instructions to create the VNICs for the virtual network topology. It is noted that if the server is a member of only one VLAN (e.g., Web servers 402(1), 402(3), 402(5) and database server 402(2)), there is no need to install the VLAN driver 602 or to create a VNIC. The network interface can designate the appropriate physical connection to the switch port, and the switch port can be configured with the appropriate VLAN membership, forwarding all traffic to/from the server over the VLAN. On the other hand, there is no drawback to installing a VLAN driver and creating a single VNIC, even if the server is used for just a single VLAN.

For certain specialized devices, the resource manager may not be able to install a VNIC on these devices. However, these devices can still be programmed to a particular VLAN. Some devices are equipped with multiple physical ports. Each of these physical ports can be made a member of a different VLAN by programming the switch ports to which these devices are connected. For other specialized devices, the resource manager programs them with a device-specific driver to place the appropriate port on a specific VLAN. This is akin to telling a switch port to be a member of a specific VLAN.

### Generating, Virtual Network Topologies

Fig. 7 shows a process 700 for generating a virtual network topology to support a distributed application and deploying the resources for the application. The process 700 is illustrated as a series of blocks, which represent operations performed by various computers in the computing system 200. The operations may be implemented in software that can be executed on the various computers. As such, the blocks represent instructions stored on computer-readable media that can be executed on processors to perform the associated operations.

At block 702, the application architect designs a virtual layout of a distributed application to be deployed on the distributed computing system 200. The virtual layout specifies what components are used and how those components are interconnected. For instance, to design the application illustrated in Fig. 5, the architect would specify components for web servers, database server, firewall, and connections among these components.

At block 704, the system determines the physical resources that will be allocated to instantiate the various components of the distributed application. The system decides, for example, how many servers are to be deployed to support the application. This determination is based in part on input received from the architect indicating such parameters as the size of the service, how many users are anticipated, and so forth.

After the application is architected and instantiations for components are determined, the resource manager 212 implemented at the virtual network topology generation server 210 uses virtual LANs (VLANs) and virtual network interfaces (VNICs) to realize the mapping from a virtual network topology to the physical network. At block 706, the virtual network topology generation server 210 creates at least one virtual LAN (VLAN) for each application. A virtual network topology for a single application may utilize more than one VLAN to establish multiple isolation zones, as is the case for the virtual network topology 500 illustrated in Fig. 5. In that example, the virtual network topology generation server 210 creates two VLANs: Web VLAN 502 and DB VLAN 504. The two VLANs isolate the web servers 402(1), 402(3), and 402(5) from the database server 402(2), thereby creating two isolation zones DMZ_{Web} 506 and DMZ_{DB} 508.

At block 708, the resource manager 212 at the virtual network topology generation server 210 deploys physical computing resources to the respective VLANs. In other words, the resource manager 212 assigns physical resources from the physical network 400 (Fig. 4) to support the virtual network topology of the application. This deployment involves two sub-operations, designated as blocks 708(1) and 708(2) in Fig. 7.

At block 708(1), the resource manager 212 assigns an external switch port of the network switches 404 (i.e., a port that is connected to a server) to a designated VLAN to which the server belongs. An external switch port can be configured with one or more VLAN memberships.

At block 708(2), the resource manager 212 creates a virtual network interface (VNIC) at a server to enable communication over the designated VLAN so that the server can become a member of the VLAN. It is noted that this operation is optional if the server is a member of only one VLAN (e.g., Web servers 402(1), 402(3), 402(5) and database server 402(2)). In this case, configuring the switch port with the VLAN membership is adequate because the server will be communicating with over just one VLAN. The switch assumes that all traffic from the server is destined for the single configured VLAN. When the server is a member of two or more VLANs (e.g., firewall server 402(4)), a VLAN driver is installed on the server. The VLAN driver binds to the physical network interface and creates two or more virtual network interfaces (VNICs) above it. Each virtual network interface represents a unique VLAN identity. Packets sent out on a VNIC are tagged with the VLAN identity. The switch examines the VLAN tag and is able to ascertain to which VLAN the packet is bound.

The physical computing resources continue to be deployed in this two-operation manner until the application is fully installed, as represented by the decision block 710.

To illustrate the deployment of physical resources, consider how the resource manager 212 deploys computers for the virtual network topology 500 of Fig. 5. This process will be described with reference to both Figs. 5 and 6. Initially, the two VLANs―Web VLAN 502 and DB VLAN 504―are created at operation 706. Next, suppose the resource manager 212 decides to add the firewall server 402(4) to the Web VLAN 502 to define isolation zone DMZ_{Web} 506. The resource manager 212 informs the switch 404 to set port 4 to reference the Web VLAN 502, which is illustrated in Fig. 6 by adding the "VLAN_{Web}" identity to the port 4. This is representative of operation 708(1) in process 700. The switch 404 now understands that it is part of the isolation zone DMZ_{Web} 506. The resource manager 212 then directs the VLAN driver 602 at the firewall server 402(4) to create a VNIC for the Web VLAN, which is illustrated in Fig. 6 as the VNIC VLAN_{Web} 604. This is representative of operation 708(2) in process 700. Packets passed over the VNIC VLAN_{Web} 604 are tagged with the VLAN_{Web} identity and routed correctly by the switch 404 over the Web VLAN 502.

Now, suppose the resource manager 212 adds the same firewall server 402(4) to the DB VLAN 504 to define the other isolation zone DMZ_{DB} 508. The resource manager 212 informs the switch 404 to set port 4 to additionally reference the DB VLAN 504, which is illustrated in Fig. 6 by adding the "VLAN_{DB}" identity to the port 4. This is once again representative of operation 708(1) in process 700. The switch 404 is now also part of the isolation zone DMZ_{DB} 508 and will accept packets with the VLAN_{DB} identity. The resource manager 212 then directs the VLAN driver 602 at the firewall server 402(4) to create a second VNIC, this time for the DB VLAN as illustrated in Fig. 6 by the VNIC VLAN_{DB} 606. This is another representation of operation 708(2) in process 700. Packets passed over the VNIC VLAN_{DB} 606 are tagged with the VLAN_{DB} identity and routed correctly by the switch 404 over the DB VLAN 504.

The process can be repeated for connecting each Web server 402(1), 402(3), and 402(5) to the Web VLAN 502 and the database server to DB VLAN 504. As noted above, the addition of these servers can be accomplished by simply configuring the corresponding switch ports P₁, P₂, P₃, and P₅ with the appropriate VLAN membership. Virtual network interfaces need not be created at the servers, since the servers are currently part of just one VLAN.

### Exemplary Resource Manager APIs

The following section provides an exemplary set of application program interfaces (APIs) provided by the resource manager (RM) 212 to remotely configure the switches and the servers. The APIs are used to establish VLANs, connect the switches to the appropriate VLANs, and create VNICs at the servers to facilitate communication over associated VLANs, thereby realizing the mapping from the virtual network topologies onto the physical network resources. It is noted that this topology mapping is accomplished using in-band techniques over the existing network, rather than using a specially dedicated out-of-band network. Accordingly, there is a default connectivity from which to begin, thus providing a foundation for configuring new VLANs as needed.

The construction and de-allocation of virtual topologies is facilitated by the following core web methods exposed by the RM:
- AllocateVlan()
- ConstructVlan()
- AttachComputerToVlan()
- DetachComputerFromVlan()
- ReleaseVlan()

The following lists exemplary interfaces provided by the RM, including discussion of these five web methods:

### Register

/// <summary>
/// Registers this resource manager with the runtime on the machine "runtimeAddress".
/// </summary>
/// <param name="runtimeAddress">IP address of the runtime to register with.</param>
/// <returns>Component instance of this resource manager.</returns>
/// <remarks>
/// Just returns the component instance of this resource manager of duplicate calls.
/// </remarks>
[WebMethod(Description="Register this resource manager with the runtime.")] public long Register(string runtimeAddress)

### Unregister

/// <summary>
/// Unregisters this resource manager from the runtime on the machine "runtimeAddress".
/// </summary>
/// <param name="runtimeAddress">IP address of the runtime to unregister from.</param>
/// <remarks>
/// Does nothing on a duplicate call.
/// </remarks>
[WebMethod(Description="Unregister this resource manager from the runtime.")] public void Unregister(string runtimeAddress)

### RegisterComputer

/// <summary>
/// Register a computer and its relationship with network devices (typically switches)
/// with the Network Resource Manager.
/// </summary>
/// <param name="computer">Information on the computer to register.</param>
/// <remarks>
/// A computer must be registered before any operation is performed on that computer (any
/// method call that requires a 'computerld').
///
/// A "managed" computer is a computer that contains the VLAN tag driver and the network
/// resource manager has permission to update the computer's virtual interface and IP
/// addressing setting. If unmanaged, the computer is moved to the specified VLAN and is
/// not accessed (the caller must create the proper virtual interface on the computer).
/// </remarks>
[WebMethod(Description="Register a computer with the Network Resource Manager.")] public void RegisterComputer(NrmComputer computer)

### RegisterDevice

/// <summary>
/// Register a network device with the Network Resource Manager.
/// </summary>
/// <param name="device">Information on the device to register.</param>
/// <remarks>
/// A device must be registered before any operation is performed on that device. On
/// registration the device will be connected to and soft configuration information
/// retrieved.
/// </remarks>
[WebMethod(Description="Register a network device with the Network Resource Manager.")] public void RegisterDevice(NrmDevice device)

### UnregisterComputer

/// <summary>
/// Unregister a computer from the Network Resource Manager.
/// </summary>
/// <param name="computerld">Identifier of computer to unregister.</param>
/// <param name="force">Force automatic clean up of held resources.</param>
/// <remarks>
/// A computer must been previously registered and all held network resources released
/// before unregistration.
///
/// The 'force' flag will scrub the database of any references to the device without
/// attempting to communicate with the device.
/// </remarks>
[WebMethod(Description="Unregister a computer from the Network Resource Manager.")] public void UnregisterComputer(long computerld, bool force)

### UnregisterDevice

/// <summary>
/// Unregister a device from the Network Resource Manager.
/// </summary>
/// <param name="deviceld">Identifier of device to unregister.</param>
/// <param name="force">Force automatic clean up of held resources.</param>
/// <remarks>
/// A device must been previously registered and all held network resources released
/// before unregistration.
///
/// The 'force' flag will scrub the database of any references to the device without
/// attempting to communicate with the device.
/// </remarks>
[WebMethod(Description="Unregister a network device from the Network Resource Manager.")] public void UnregisterDevice(long deviceld, bool force)

### AllocateVlan

/// <summary>
/// Allocates a new VLAN from the network resource database if available and is supported
/// by this network environment. If successful, the allocated vlan is recorded with the
/// owner identification.
/// </summary>
/// <param name="ownerld">Owner identification of the allocated resource.</param>
/// <returns>A VLAN tag identifier of the newly allocated VLAN.</returns>
/// <remarks>
/// The allocation is only performed in the network resource database and the network is
/// not affected. A call to 'ConstructVlan' is required to create the actual vlan in the
/// network environment.
/// </remarks>
[WebMethod(Description="Allocate a VLAN")]
/// <algorithm>
/// Prior State:
/// The number of VLANs available within a network fabric is determined by three
/// factors: the type and configuration of physical switch(es), the number of VLANs
/// reserved for internal use, and previous allocations of VLANs. While the current
/// theoretical range of VLANs is 1 to 4095, the actual number may be limited by the
/// implementation of VLANs on a switch. For example, a switch may only support a
/// range of 1 to 1001 with a maximum allocated VLANs of 256. Knowledge of the switch
/// architecture, reserved for internal use VLANs and previously allocated VLANs is
/// tracked in a persistent database.
///
/// Description:
/// 1. Validate parameter is valid. Ownerld must be non-zero value.
/// 2. Transaction lock database.
/// 3. Examine database to determine if a new VLAN can be allocated without exceeding
/// the maximum permitted by the current network fabric.
/// 4. If no more VLANs are permitted, throw exception and release database lock.
/// 5. Create new row in database to represent the allocated VLAN entry. The VLAN
/// identifier is determined by a linear scan of existing VLAN entries to find the
/// first available (not allocated) identifier.
/// 6. Commit transaction.
/// 7. Return the allocated VLAN identifier to caller.
/// </algorithm>
public int AllocateVlan(long ownerld)

### AllocateVlanWithld

/// <summary>
/// Allocates the specific VLAN requested from the network resource database if available
/// and is supported by this network environment. If successful, the allocated vlan is
/// recorded with the owner identification.
/// </summary>
/// <param name="ownerld">Owner identification of the allocated resource.</param>
/// <param name="vlanld">The identifier of the Vlan to allocate.</param>
/// <remarks>
/// The allocation is only performed in the network resource database and the network is
/// not affected. A call to 'ConstructVlan' is require to create the actual vlan in the
/// network environment. The default VLAN can not be allocated.
/// </remarks>
[WebMethod(Description="Allocates a specific VLAN.")] public void AllocateVlanWithld(long ownerld, int vlanld)

### ConstructVlan

/// <summary>
/// Constructs a previously allocated VLAN by creating a new vlan entry in the network
/// hardware (switches) and updating the state of the Network VLAN entry in the database.
/// </summary>
/// <param name="vlanld">Identifier of VLAN to construct.</param>
/// <remarks>
/// The VLAN must have been successfully created via the 'AllocateVlan' method.
/// </remarks>
/// <devdoc>
[WebMethod(Description="Construct a pre-allocated VLAN.")]
/// <algorithm>
/// Prior State:
/// The VLAN identifier to be constructed was allocated in a prior method call to
/// AllocateVlan() which reserves the VLAN identifier in the persistent database.
/// All network switches are defined in the database and are available for
/// configuration.
///
/// Description:
/// 1. Transaction lock database.
/// 2. The vlanld must exist in the database in the 'allocated' state.
/// 3. For each switch in the database, allocate the VLAN identifier on that switch
/// using the type specific device driver for that switch.
/// 4. Update state of the VLAN to 'constructed' in the database.
/// 5. Commit transaction.
/// </algorithm>
public void ConstructVlan(int vlanld)

### AttachComputerToVlan

/// <summary>
/// Attach a computer to the VLAN and update its virtual interface and addressing if
/// managed.
/// </summary>
/// <param name="computerld">Identifier of computer to attach to.</param>
/// <param name="vlanld">VLAN identifier to attach port to.</param>
/// <param name="tagged">The VLAN is tagged and required the VLAN driver.</param>
/// <param name="managed">The target computer is managed.</param>
/// <returns>
/// The IP address and subnet mask used to access the computer on the specified VLAN.
/// </returns>
/// <remarks>
/// Attaching to the default VLAN is not possible. Detaching a computer from all VLANs
/// will place it on the default VLAN.
///
/// If the 'tagged' argument is true then the computer will be attached to the VLAN
/// specified in tagged mode. This requires the computer to use the Virtual VLAN driver
/// to create a virtual interface for that VLAN to access the network. A computer can
/// exist in multiple tagged VLAN, but only a single untagged VLAN. Not possible to mix
/// tagged and untagged VLANs.
///
/// A "managed" computer is a computer that contains the VLAN tag driver and the network
/// resource manager has permission to update the computer's virtual interface and IP
/// addressing setting. If unmanaged, the computer is moved to the specified VLAN and is
/// not accessed. If 'managed' is true then the 'tagged' argument must be true. If
///'managed' is false and 'tagged' is true, the caller is responsible for creating a
/// virtual interface on the computer.
/// </remarks>
[WebMethod(Description="Attach a computer to the specified VLAN.")]
/// <algorithm>
/// Prior State:
/// The computer to be attached has been registered with the NRM to provide details on
/// the wire path between the physical NICs on the computer and the port on the switch
/// connected to. The VLAN identifier has been successful constructed.
///
/// Description:
/// 1. Transaction lock database.
/// 2. The computerld must exist in the database with topology details.
/// 3. The vlanld must exist in the database in the 'constructed' state.
/// 4. Using a remote call, add a new Virtual NIC on the specified computer for the
/// VLAN identifier provided.
/// 3. For each switch in the database, attach the switch port physically attached to
/// the computer to the VLAN identifier using the type specific device driver for
/// that switch.
/// 4. Add a new 'attached' record to the database to indicate the computer's
/// relationship with the VLAN.
/// 5. Commit transaction.
/// </algorithm>
public string AttachComputerToVlan(long computerld, int vlanld, bool tagged, bool managed)

### DetachComputerFromVlan

/// <summary>
/// Detach a computer from a VLAN.
/// </summary>
/// <param name="vlanld">Vlan identifier to detach from.</param>
/// <param name="computerld">Computer identifier to detach from.</param>
/// <param name="managed">The target computer is managed.</param>
/// <remarks>
/// Detaching from the default VLAN is not possible. If the managed flag is set then
/// the Network Resource Manager requires remote access to the VLAN tag driver and the virtual VLAN interface will be removed from the specified computer. If the remote
/// computer has failed, set the 'managed' parameter to 'false'.
/// </remarks>
[WebMethod(Description="Detach a computer from the specified VLAN.")]
/// <algorithm>
/// Prior State:
/// The computer to be attached has been registered with the NRM to provide details on
/// the wire path between the physical NICs on the computer and the port on the switch
/// connected to. The VLAN identifier has been successful constructed. The computer
/// was attached to the VLAN in a prior method call to AttachComputerToVlan.
///
/// Description:
/// 1. Transaction lock database.
/// 2. The computerld must exist in the database with topology details.
/// 3. The vlanld must exist in the database in the 'constructed' state.
/// 4. An 'attached' record must exist in the database.
/// 5. For each switch in the database, detach the switch port physically attached to
/// the computer to the VLAN identifier using the type specific device driver for
/// that switch.
/// 6. Using a remote call, remove the Virtual NIC on the specified computer for the
/// VLAN identifier provided.
/// 7. Remove the 'attached' record from the database to indicate the computer's
/// relationship with the VLAN no longer exist.
/// 8. Commit transaction.
/// </algorithm>
public void DetachComputerFromVlan(long computerld, int vlanld, bool managed)

### AttachComputerToExternal

/// <summary>
/// Attach a computer to the external VLAN and update its virtual interface and
/// addressing if managed.
/// </summary>
/// <param name="computerld">Identifier of computer to attach to.</param>
/// <param name="tagged">The VLAN is tagged and required the VLAN driver.</param>
/// <param name="managed">The target computer is managed.</param>
/// <returns>
/// The IP address and subnet mask used to access the computer on the specified VLAN.
/// </returns>
/// <remarks>
/// If the 'tagged' argument is true then the computer will be attached to the VLAN
/// specified in tagged mode. This requires the computer to use the Virtual VLAN driver
/// to create a virtual interface for that VLAN to access the network. A computer can
/// exist in multiple tagged VLAN, but only a single untagged VLAN. Not possible to mix
/// tagged and untagged VLANs.
///
/// A "managed" computer is a computer that contains the VLAN tag driver and the network
/// resource manager has permission to update the computer's virtual interface and IP
/// addressing setting. If unmanaged, the computer is moved to the specified VLAN and is
/// not accessed. If 'managed' is true then the 'tagged' argument must be true. If
/// 'managed' is false and 'tagged' is true, the caller is responsible for creating a
/// virtual interface on the computer.
/// </remarks>
[WebMethod(Description="Attach a computer to the external VLAN.")] public string AttachComputerToExternal(long computerld, bool tagged, bool managed)

### DetachComputerFromExternal

/// <summary>
/// Detach a computer from the external VLAN.
/// </summary>
/// <param name="computerId">Computer identifier to detach from.</param>
/// <param name="managed">The target computer is managed.</param>
/// <remarks>
/// If the managed flag is set then the Network Resource Manager requires remote access /// to the VLAN tag driver and the virtual VLAN interface will be removed from the
/// specified computer. If the remote computer has failed, set the 'managed' parameter
/// to 'false'.
/// </remarks>
[WebMethod(Description="Detach a computer from the external VLAN.")] public void DetachComputerFromExternal(long computerld, bool managed)

### ReleaseVlan

/// <summary>
/// Releases a previously allocated/constructed. If constructed, the VLAN resource is
/// deleted from the network fabric.
/// </summary>
*lll* <param name="vlanld">Identifier of the VLAN to release.</param>
/// <remarks>
/// The VLAN must have been successfully created via the 'AllocateVlan' method.
/// </remarks>
/// <devdoc>
[WebMethod(Description="Release a previously allocated/constructed VLAN.")]
/// <algorithm>
/// Prior State:
/// The VLAN identifier has been successful constructed. No computer attached records
/// reference this VLAN identifier.
///
/// Description:
/// 1. Transaction lock database.
/// 2. The vlanld must exist in the database in the 'constructed' state.
/// 3. For each switch in the database, delete the VLAN identifier using the type
/// specific device driver for that switch.
/// 4. Remove the VLAN record from the database to indicate the VLAN identifier is
/// no longer allocated.
/// 5. Commit transaction.
/// </algorithm>
public void ReleaseVlan(int vlanld)

### ReleaseComputerToDiscovery

/// <summary>
/// Releases all held network resources of a computer and returns the computer back to the
/// 'Discovery' VLAN. The IP address of the computer is returned.
/// </summary>
/// <param name="computerld">Identifier of the computer in the HRM to release.</param>
/// <param name="managed">The target computer is managed.</param>
/// <returns>IP address of the computer within the Discovery VLAN.</returns>
/// <remarks>
/// If the computer had at least one VLAN created it will return a static IP address set
/// by the Network Resource Manager, else it will return the original IP provided by the
/// Hardwarre Resoruce Manager.
/// </remarks>
///<devdoc>
/// This code was written to support the PcFactory requirement to return a computer back
/// to the Discovery VLAN to permit it to remotely reboot the computer to force a PXE
/// boot sequence.
/// </devdoc>
[WebMethod(Description="Release computer to the discovery network.")] public string ReleaseComputerToDiscovery(long computerld, bool managed)

### ReleaseResourcesByOwner

/// <summary>
/// Releases all network resources that are associated with a specific owner.
/// </summary>
/// <param name="ownerld">The object representing the owner of the resources.</param>
/// <devdoc>
[WebMethod(Description="Release all resources held by a specific owner.")] public void ReleaseResourcesByOwner(long ownerld)

### ReleaseResourcesByComputer

/// <summary>
/// Releases all network resources that are associated with a specific computer.
/// </summary>
/// <param name="computerld">The identifier representing the computer.</param>
/// <param name="managed">The target computer is managed.</param>
/// <remarks>
/// Releases all attached VLANs to this computer. Typically used by clean up logic to
/// remove a computer from the network. If the managed flag is set then the Network
/// Resource Manager requires remote access to the VLAN tag driver and any created
/// virtual VLAN interface will be removed from the specified computer. If the remote
/// computer has failed, set the 'managed' parameter to 'false'.
/// </remarks>
[WebMethod(Description="Release all resources held by a specific owner.")] public void ReleaseResourcesByComputer(long computerld, bool managed)

### QueryConfiguration

/// <summary>
/// Returns information on the Network Resource Manager's configuration settings.
/// </summary>
/// <returns>NrmConfiguration value.</returns>
[WebMethod(Description="Query configuration settings.")] public NrmConfiguration QueryConfiguration()

### QueryComputer

/// <summary>
/// Returns information of a specific registered network computer.
/// </summary>
/// <returns>NrmComputer value.</returns>
[WebMethod(Description="Query a registered network computer.")] public NrmComputer QueryComputer(long computerld)

### QueryComputerlpAddress

/// <summary>
/// Query the IP address of a computer on a specific VLAN.
/// </summary>
/// <param name="computerld">Identifier of computer to query.</param>
/// <param name="vlanld">VLAN identifier to query IP address of.</param>
/// <returns>
/// The IP address to access the computer on the specified VLAN.
/// </returns>
/// <remarks>
/// For each VLAN a computer is attached to it will have a fixed (static) IP address that
/// is used to access the computer remotely over the specific VLAN.
/// </remarks>
[WebMethod(Description="Query the IP address of a computer on a specific VLAN.")] public string QueryComputerlpAddress(long computerld, int vlanld)

### QueryComputers

/// <summary>
/// Returns all registered network computers within the Network Resource Manager's
/// database.
/// </summary>
/// <returns>An array of NrmComputer values.</returns>
[WebMethod(Description="Query all registered network computers.")] public NrmComputer [] QueryComputers()

### QueryDevice

/// <summary>
/// Returns information of a specific registered network device.
/// </summary>
/// <returns>NrmDevice value.</returns>
[WebMethod(Description="Query a registered network device.")] public NrmDevice QueryDevice(long deviceld)

### QueryDevices

/// <summary>
/// Returns all registered network devices within the Network Resource Manager's database.
/// </summary>
/// <returns>An array of NrmDevice values.</returns>
/// <remarks>Typical use is for diagnostics and/or administrator tools.</remarks>
[WebMethod(Description="Query all registered network devices.")] public NrmDevice [] QueryDevices()

### QueryExternalVlanld

/// <summary>
/// Retrieves the VLAN identifier of the external VLAN.
/// </summary>
/// <returns>Identifier of the external VLAN.</returns>
[WebMethod(Description="Query the VLAN identifier of the external VLAN.")] public int QueryExternalVlanld()

### QueryVlans

/// <summary>
/// Retrieves the status of all allocated VLANs.
/// </summary>
/// <returns>Adataset of NetworkVlan rows.</returns>
/// <remarks>Typical use is for diagnostics and/or administrator tools.</remarks>
[WebMethod(Description="Query the resource handle of an allocated VLAN.")] public DataSet QueryVlans()

### UpdateComputerToStatic

/// <summary>
/// Update the VLAN-0 virtual interface from its default DHCP state to using a status IP
/// address. This command is very specific to the sequence of configuring the networking
/// of a newly imaged "managed" computer running the Virtual VLAN/MUX driver.
/// </summary>
/// <param name="computerld">Identifier of computer to update.</param>
/// <remarks>
/// To support the PXE/ADS imaging environment, new computer nodes PXE boot and are imaged
/// on an untagged VLAN using DHCP to obtain their IP address. To provide the NRM with a
/// method to access the computer node at a later time (after removing all VLANs), the
/// DHCP address is updated with a static IP address on a non-conflicting address range.
///
/// The VLAN number used to generate the IP address is the "Static" VLAN and defined in
/// the global network configuration entry in the database. Due to the "Static" VLAN
/// spanning multiple address ranges, a smaller subnet mask is used and is also defined in
/// the global network configuration entry in the database.
///
/// This call can not use the DHCP address to access the computer and a previous created
/// Virtual NIC interface must be used for access.
/// </remarks>
[WebMethod(Description="Update computer from DHCP to static IP on VLAN-0.")] public void UpdateComputerToStatic(long computerld)

### Status

/// <summary>
/// Used by external services to obtain the current status of this web service.
/// </summary>
/// <returns>0 for normal, 1 if not registered.</returns>
/// <remarks>
/// Used by the monitor service to check for availability.
/// </remarks>
[WebMethod(Description="Current status of this web service.")] public int Status()

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention. Moreover, these claims are just exemplary of possible scope and subject matter, and many combinations and sub-combinations of the features described herein are expected to become the subject of claims through many patent applications to be perfected from this provisional.

## Claims

1. A method comprising:
providing a distributed application; and
building a virtual network topology for the distributed application on a physical distributed computing system without reconfiguring physical connections of the distributed computing system.

2. A method comprising:
building a virtual network topology for a distributed application; and
automatically and remotely deploying the distributed application on a physical distributed computing system comprised of multiple computers and network switches according to the virtual network topology without reconfiguring physical connections of the distributed computing system.

3. A method as recited in claim 2, wherein the building comprises creating at least one virtual local area network (VLAN) for the distributed application.

4. A method as recited in claim 3, wherein the deploying comprises remotely instructing physical resources of the distributed computing system to connect to the VLAN for the application.

5. A method as recited in claim 3, wherein the deploying comprises:
assigning the network switches to the VLAN;
forming, at each computer to be used to host the distributed application, a virtual network interface; and
associating the virtual network interface with the VLAN.

6. One or more computer readable media storing computer executable instructions that, when executed, perform the method as recited in claim 2.

7. A method comprising:
generating multiple virtual network topologies for associated distributed applications to be hosted on a common distributed computing system;
creating at least one virtual local area network (VLAN) for each virtual network topology; and
automatically deploying physical resources of the distributed computing system to the virtual network topologies in a manner that enables the distributed applications to communicate via associated VLANs in isolation from one another.

8. A method as recited in claim 7, wherein the deploying comprises:
remotely assigning network switches of the distributed computing system to the VLANs; and
remotely directing each computer to be used to host a particular distributed application to create a virtual network interface and associate the virtual network interface with the VLAN associated with the particular distributed application.

9. One or more computer readable media storing computer executable instructions that, when executed, perform the method as recited in claim 7.

10. In a distributed computing system having multiple computers interconnected via a network of switches, a method comprising:
creating a virtual local area network (VLAN) having a VLAN identity; and
for each computer to be associated with the VLAN,
assigning the VLAN identity to a switch port of the network of switches to which the computer is connected; and
creating a virtual network interface at the computer and associating the virtual network interface with the VLAN.

11. A method as recited in claim 10, wherein the VLAN comprises a first VLAN having a first VLAN identity, and further comprising:
creating a second virtual local area network (VLAN) having a second VLAN identity; and
for each computer to be associated with the second VLAN,
assigning the second VLAN identity to a switch port to which the computer is connected; and
creating a virtual network interface at the computer and associating the virtual network interface with the second VLAN.

12. One or more computer readable media storing computer executable instructions that, when executed, perform the method as recited in claim 10.

13. In a distributed computing system having multiple computers interconnected via a network of switches, a method for deploying first and second virtual local area networks (VLANs) onto the distributed computing system, comprising:
for a computer to be connected to both the first and second VLANs,
assigning a first VLAN identity associated with the first VLAN to a switch port of the network of switches to which the computer is connected;
creating a first virtual network interface at the computer and associating the first virtual network interface with the first VLAN;
assigning a second VLAN identity associated with the second VLAN to the switch port; and
creating a second virtual network interface at the computer and associating the second virtual network interface with the second VLAN.

14. A method as recited in claim 13, wherein data packets for the first VLAN are passed through the switch port and handled by the first virtual network interface at the computer and data packets for the second VLAN are passed through the switch port and handled by the second virtual network interface at the computer.

15. One or more computer readable media storing computer executable instructions that, when executed, perform the method as recited in claim 13.

16. A computer in a distributed computing system, comprising:
a network interface to facilitate physical connection to a network; and
a virtual local area network (VLAN) driver that binds to the network interface, the VLAN driver being responsive to remote instructions to create one or more virtual network interfaces over the network interface, each virtual network interface being associated with a unique VLAN.

17. A computer as recited in claim 16, wherein the VLAN driver creates first and second virtual network interfaces for associated first and second VLANs, and data packets associated with the first VLAN are received at the network interface and handled by the first virtual network interface and data packets associated with the second VLAN are received at the network interface and handled by the second virtual network interface.

18. A software driver for installation on a computer connected to a local area network (LAN), the software driver comprising:
means for creating a virtual network interface atop a physical network interface, the virtual network interface being associated with a virtual LAN (VLAN) supported by the LAN; and
means for directing data packets destined for, and received from, the LAN via the physical network interface through an appropriate virtual network interface so that the computer can participate in multiple VLANs through the physical network interface.

19. An operating system comprising:
a network interface driver to control the physical network interface;
an protocol driver to handle the data packets received via the physical network interface; and
the software driver of claim 18, inserted between the network interface driver and the protocol driver to facilitate flow of the data packets between the physical network interface and the protocol driver.

20. Computer-readable media having computer-executable instructions that, when executed, perform functions comprising:
facilitating design of virtual network topologies for distributed applications to be hosted on a distributed computing system, the distributed computing system being comprised of computers and network switches;
creating at least one virtual local area network (VLAN) for each of the distributed applications;
for each computer to be associated with a particular VLAN, assigning a VLAN identity associated with the particular VLAN to a switch port of the network of switches to which the computer is connected; and
for each computer to be associated with multiple VLANs, creating multiple virtual network interfaces at the computer and associating the virtual network interfaces with respective ones of the multiple VLANs so that the computer can be used to host the distributed applications.

21. One or more computer-readable media having computer-executable instructions that, when executed, perform functions comprising building a virtual network topology for a distributed application on a physical distributed computing system without reconfiguring physical connections of the distributed computing system.

22. A system comprising:
a driver resident at a computer that is part of a distributed computing system, the computer being connected to the distributed computing system via a network switch; and
a resource manager remote from the computer to assign a virtual local area network (VLAN) to the network switch and to direct the driver to create a virtual network interface atop a physical network interface, where the virtual network interface is associated with the VLAN.

23. A system as recited in claim 22, wherein the resource manager is configured to download and install the driver at the computer.

24. A system as recited in claim 22, wherein the resource manager uses an application program interface to establish the VLAN and the virtual network interface.

25. A system as recited in claim 22, wherein the network switch has individual ports, and the resource manager assigns a VLAN identity to a particular port to which the computer is physically connected so that the port will accept data packets associated with the VLAN identified by the VLAN identity.

26. An application program interface for a resource manager in a distributed computing system comprised of computers and network switches, the application program interface being embodied on a computer-readable medium and having methods for performing the following functions:
allocate a new virtual local area network (VLAN);
construct a previously allocated VLAN by creating a new VLAN entry at a network switch;
attach a computer to the VLAN by directing creation of a virtual network interface at the computer and assignment of the virtual network interface to the VLAN;
detach a computer from the VLAN; and
release a previously allocated VLAN.
